# EUROPEAN PATENT SPECIFICATION

(11) **EP 2 719 613 B1**
(45) Date of publication and mention of the grant of the patent: **02.03.2016**
(21) Application number: 13187916.5
(22) Date of filing: 09.10.2013
(51) Int. Cl.: B62J 17/02, B62J 23/00

(54) **Straddle-type vehicle**
Grätschsitz-Fahrzeug
Véhicule du type monté à califourchon

(30) Priority: 10.10.2012 JP 2012225370
(43) Date of publication of application: 16.04.2014
(73) Proprietor: Yamaha Hatsudoki Kabushiki Kaisha, SHIZUOKA-KEN 438-8501 (JP)
(72) Inventor: Takahashi, Kuniyuki, Shizuoka-ken, 438-8501 (JP)
(74) Representative: Zimmermann, Tankred Klaus

(56) References cited:
- JP-A- 2008 100 611
- JP-A- 2010 162 990
- US-A1- 2011 204 613

## Description

### BACKGROUND OF THE INVENTION

### Field of the Invention

The present invention relates to a saddle-straddling type motor vehicle that includes a fuel tank.

### Description of Related Art

In a motorcycle described in JP 2006-21639 A, a lower portion of a fuel tank is fixed between main frames branched into the right and left behind a head pipe. A top cover is provided at the front end of the fuel tank to cover a boundary portion between the main frames and the fuel tank from above.

US 2011/0204613 A1, on which the preamble of claim 1 is based, describes a saddle-straddling type motor vehicle having a fuel tank and a tank cover including a front tank cover and paired front tank side covers disposed on two sides of the front tank cover in a vehicle width direction. Paired side covers covering at least parts of the side surfaces of the fuel tank are provided and are disposed to continue to rear portions of the front tank side covers. Further motorcycles including tank and side covers are described in JP 2010 162990 A and In JP 2008 100611 A.

### BRIEF SUMMARY OF THE INVENTION

It is an object of the present invention to provide a saddle-straddling type motor vehicle in which maintainability can be improved while a storage space in a vehicle is ensured and reduction in weight of a vehicle is realized.

This object is achieved by a saddle-straddling type motor vehicle according to claim 1.

In the motorcycle described in JP 2006-21639 A, a region between the main frames in front of the fuel tank is covered by the top cover. Therefore, the region between the main frames is considered to be utilized as a storage space that stores an electric component such as a horn, a starter device or a cable, or another object.

The larger the size of an engine is, the larger the distance between the pair of main frames in a vehicle width direction is. Therefore, a large-sized motorcycle that includes a multi-cylinder engine with large engine displacement, for example, can ensure a large storage space between the pair of main frames. However, it is difficult for a small-sized motorcycle that includes a single-cylinder engine with small engine displacement to ensure the storage space between the pair of main frames. In that case, the electric component or the like is exposed outside. As a result, it is difficult to sufficiently protect the electric component or the like.

On the other hand, if the distance between the pair of main frames is increased in order to ensure the storage space between the pair of main frames, the size of the main frames increases. As a result, the weight of the motorcycle increases.

Further, it is not easy to maintain the electric component or the like between the main frames without removal of the main frames. Therefore, the main frames need to be removed. However, the fuel tank, the engine and the like are fixed to the main frames, so that the removing task of the main frames is very complicated. Therefore, maintainability is markedly reduced.

In accordance with the present invention there is provided a saddle-straddling type motor vehicle as set out in independent claim 1. Preferred embodiments of the present invention are laid down in the appended dependent claims 2-11.

Other features, elements, characteristics, and advantages of the present invention will become more apparent from the following description of preferred embodiments of the present invention with reference to the attached drawings.

### BRIEF DESCRIPTION OF THE SEVERAL VIEWS OF THE DRAWING

Fig. 1 is a side view of one side of a motorcycle according to one embodiment of the present invention;
Fig. 2 is a plan view of the motorcycle of Fig. 1 as viewed from above;
Fig. 3 is a partially exploded plan view mainly showing a tank cover, a pair of side covers and a pair of front covers of Figs. 1 and 2;
Fig. 4 is a plan view of a fuel tank being supported on a pair of main frames;
Fig. 5(a) is an external perspective view of the tank cover;
Fig. 5(b) is a plan view of the tank cover;
Fig. 5(c) is a side view of one side of the tank cover;
Fig. 6 is a plan view of the tank cover being attached on the fuel tank;
Fig. 7 is a side view of one side of the tank cover being attached on the fuel tank;
Fig. 8 is a front view of the tank cover being attached on the fuel tank;
Fig. 9 is an external perspective view of the tank cover being attached on the fuel tank;
Fig. 10 is a plan view of the pair of front covers being attached to the pair of side covers;
Fig. 11 is a front view of the pair of front covers being attached to the pair of side covers;
Fig. 12 is an external perspective view of the pair of front covers being attached to the pair of side covers;
Fig. 13 is a plan view of the pair of side covers and the pair of front covers being attached to the pair of main frames and the tank cover;
Fig. 14 is a side view of one side of the pair of side covers and the pair of front covers being attached to the pair of main frames and the tank cover;
Fig. 15 is a front view of the pair of side covers and the pair of front covers being attached to the pair of main frames and the tank cover;
Fig. 16 is an external perspective view of the pair of side covers and the pair of front covers being attached to the pair of main frames and the tank cover; and
Fig. 17 is a partially enlarged side view of the motorcycle when a handle is operated leftward.

### DESCRIPTION OF THE PREFERRED EMBODIMENTS

A saddle-straddling type motor vehicle according to one embodiment of the present invention will be described below with reference to the drawings. In the following description, a motorcycle will be described as one example of the saddle-straddling type motor vehicle.

### (1) Schematic Configuration of Motorcycle

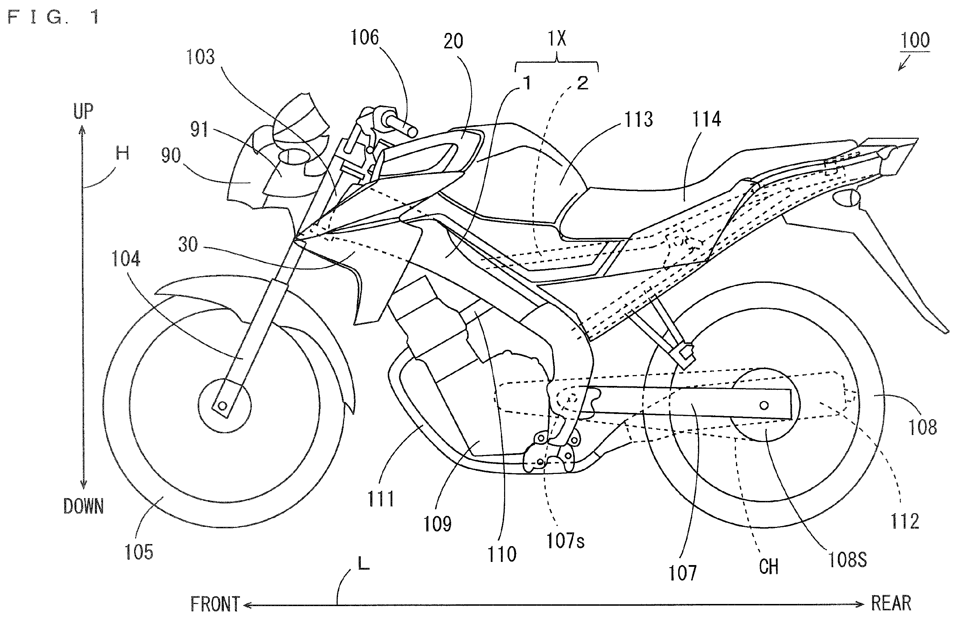

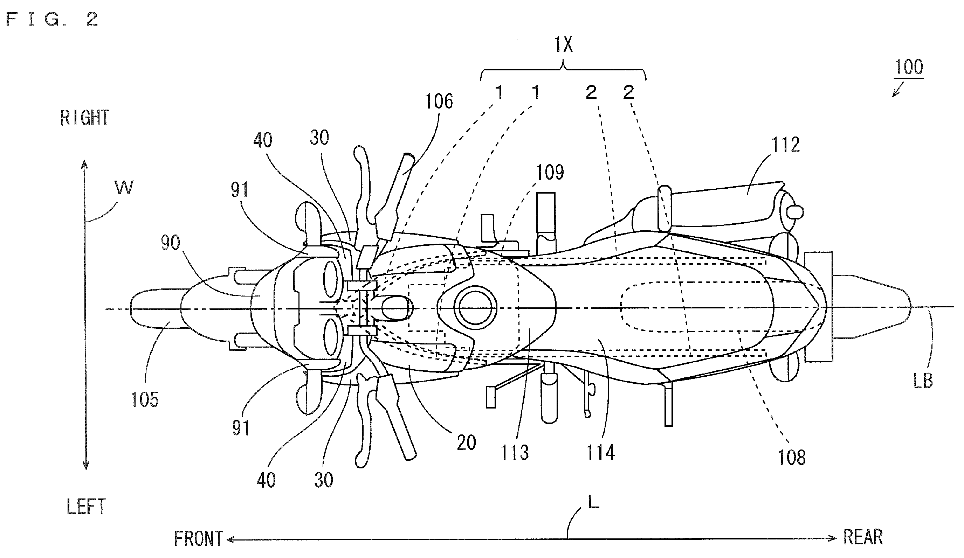

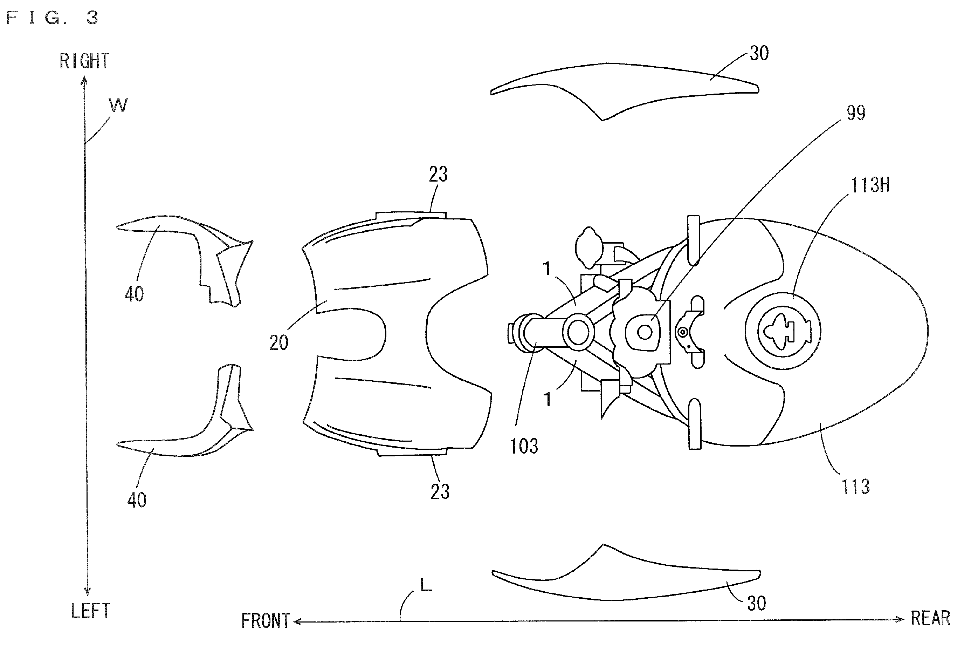

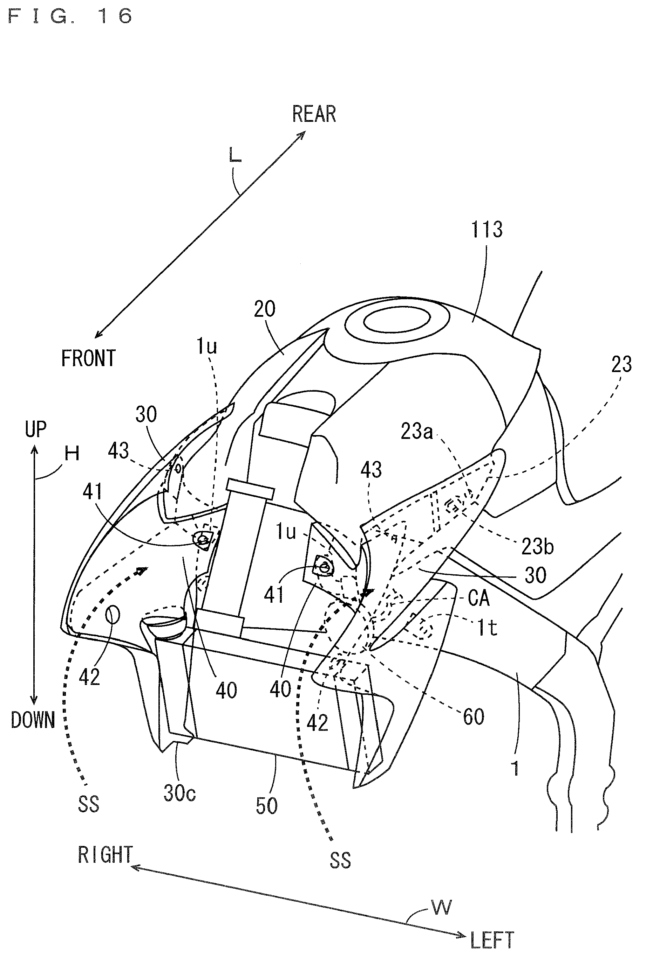

Fig. 1 is a side view of one side of the motorcycle according to one embodiment of the present invention, and Fig. 2 is a plan view of the motorcycle 100 of Fig. 1 as viewed from above. Figs. 1 and 2 show the motorcycle 100 being stood up to be vertical to a road surface. In Fig. 1, the arrows denote the front and rear direction L and the up-and-down direction H of the motorcycle 100. Further, in Fig. 2, the arrows denote the front and rear direction L and the width direction W of the motorcycle 100. In subsequent Figs. 3 to 17, the arrows similarly denote the front and rear direction L, the width direction W and the up-and-down direction H.

As shown in Figs. 1 and 2, the motorcycle 100 includes a vehicle body frame 1X. The vehicle body frame 1X includes a head pipe 103, a pair of right and left main frames 1 and a pair of right and left sub-frames 2.

The pair of main frames 1 is provided to extend rearward from the head pipe 103. The pair of sub-frames 2 is attached to the rear ends of the pair of main frames 1 to extend rearward.

As shown in Fig. 2, when the motorcycle 100 stood up vertically is viewed from above, each of the main frames 1 is formed such that the distance between each of the main frames 1 and a vehicle central axis LB increases rearward from the head pipe 103. Further, the pair of sub-frames 2 extends in the front and rear direction L to be spaced apart from each other with the vehicle central axis LB arranged therebetween. In the present embodiment, the vehicle central axis LB extends in the front and rear direction L of the motorcycle 100 and passes through the central portion of a rear wheel 108, described below, in the width direction W. In Fig. 1, and Figs. 4 and 6 described below, the vehicle central axis LB is indicated by the two-dots dash line.

As shown in Fig. 1, a front fork 104 is provided at the head pipe 103 to be swingable to the right and left. A head light 90 is attached in the vicinity of the upper end of the front fork 104. The head light 90 is positioned in front of the head pipe 103. A head light cover 91 is provided to cover both sides of the head light 90. A front wheel 105 is supported at the lower end of the front fork 104 to be rotatable. A handle 106 is attached to the upper end of the head pipe 103. The handle 106 is supported at the head pipe 103 to be rotatable.

An engine 109 is provided in the vicinity of the lower ends of the pair of main frames 1. The engine 109 is supported between the pair of main frames 1 when seen in plan view. One end of an intake pipe 110 is attached to an intake port of the engine 109, and one end of an exhaust pipe 111 is attached to an exhaust port of the engine 109. A muffler 112 is attached to the other end of the exhaust pipe 111.

The pair of sub-frames 2 is positioned above the engine 109. A fuel tank 113 is supported by the pair of main frames 1 and the pair of sub-frames 2 at the position above the engine 109. A seat 114 is supported by the pair of sub-frames 2 at the position behind the fuel tank 113. The seat 114 of this example is a seat in which two seating portions for two riders are integrally formed. A rider who operates the motorcycle 100 can be seated in the front portion of the seat 114. Further, a rider who does not operate the motorcycle 100 can be seated in the rear portion of the seat 114.

A rear arm 107 is provided to extend rearward from lower portions of the pair of main frames 1. The front end of the rear arm 107 is attached to the pair of main frames 1 via a support shaft 107s. The rear end of the rear arm 107 holds the rear wheel 108 and a rear wheel driven sprocket 108S to be rotatable. A chain CH is attached to the rear wheel driven sprocket 108S. The rear arm 107 is swingable by a suspension (not shown) in the up-and-down direction H with the support shaft 107s as a center.

As shown in Fig. 2, a tank cover 20 is provided on the fuel tank 113 at a position behind the head light 90 to be spaced apart from the head light 90 and the head light cover 91. Further, a pair of right and left side covers 30 is provided to be spaced apart from the head light 90 and the head light cover 91 and cover part of the pair of main frames 1 from both sides. Further, a pair of right and left front covers 40 is provided at front portions of the pair of side covers 30, respectively.

Fig. 3 is a partially exploded plan view mainly showing the tank cover 20, the pair of side covers 30 and the pair of front covers 40 of Figs. 1 and 2. As shown in Fig. 3, the fuel tank 113 is arranged to overlap with part of the main frames 1 when seen in plan view. A key operation unit 99 is arranged between the head pipe 103 and the fuel tank 113. The key operation unit 99 is supported by the pair of main frames 1 and operated by a rider at the time of starting the engine 109. A fuel filling portion 113H is provided at the center of the upper surface of the fuel tank 113.

In assembly of the motorcycle 100, the tank cover 20 is first attached to the upper surface of the fuel tank 113. Further, the pair of right and left front covers 40 is attached to the pair of right and left side covers 30, respectively. Thereafter, the left side cover 30 and the left front cover 40 are attached to the left main frame 1 and the left side of the tank cover 20. Further, the right side cover 30 and the right front cover 40 are attached to the right main frame 1 and the right side of the tank cover 20.

### (2) Pair of Main Frames and Fuel Tank

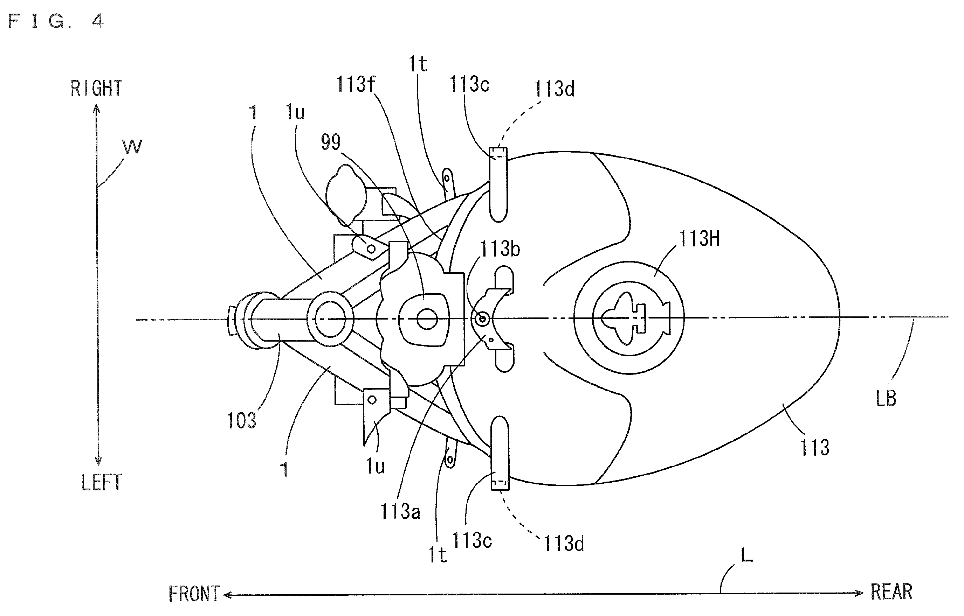

Fig. 4 is a plan view showing the fuel tank 113 being supported on the pair of main frames 1. As shown in Fig. 4, the fuel tank 113 has a substantially circular arc shaped front end portion 113f curved forward in a convex shape. A long-sized supporter 113a is attached to the upper surface of the fuel tank 113 at a position that overlaps with the vehicle central axis LB between the key operation unit 99 and the fuel filling portion 113H. The center of the supporter 113a is bent upward in a convex shape. A support hole 113b is formed at the center of the supporter 113a. A grommet made of rubber is attached to the support hole 113b.

Further, a pair of support pieces 113c is provided on both sides of the supporter 113a on the upper surface of the fuel tank 113. The pair of support pieces 113c extends to project outward from the fuel tank 113 in the width direction W, respectively. The tip end of each support piece 113c is bent downward. A screw hole 113d is formed at the tip end, bent downward, of each support piece 113c.

A pair of front fixing pieces 1u and a pair of rear fixing pieces 1t are attached to the pair of main frames 1, respectively. Through holes are formed at the pair of front fixing pieces 1u and the pair of rear fixing pieces 1t, respectively.

The pair of front fixing pieces 1 is positioned between the head pipe 103 and the key operation unit 99 in the front and rear direction L. The pair of rear fixing pieces 1t is positioned in the vicinity of the front end portion 113f of the fuel tank 113 in the front and rear direction L.

### (3) Tank Cover

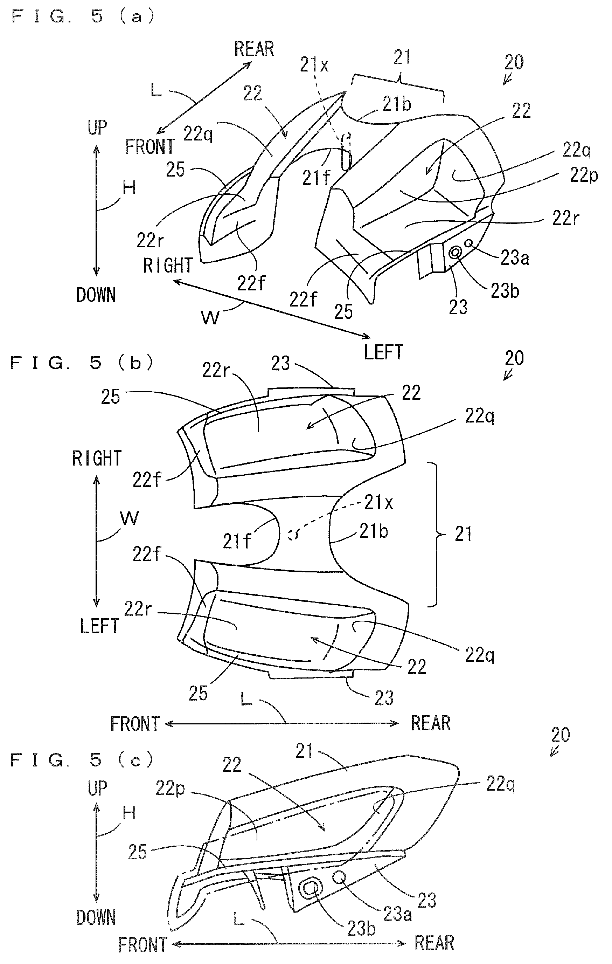

Fig. 5(a) is an external perspective view of the tank cover 20, Fig. 5(b) is a plan view of the tank cover 20 and Fig. 5(c) is a side view of one side of the tank cover 20.

As shown in Figs. 5(a) to 5(c), the tank cover 20 has a cover central portion 21 and a pair of recesses 22. The pair of recesses 22 is provided on the right and left outer sides of the cover central portion 21 when seen in plan view. A side cover supporter 23 is provided at the outer side end of each recess 22. A circular through hole 23a, and a long hole 23b that extends in the front and rear direction L are formed at each side cover supporter 23. A grommet made of rubber is attached to each long hole 23b.

A front end portion 21f of the cover central portion 21 is curved in a concave shape so as not to interfere with the key operation unit 99 of Fig. 4. Further, a rear end portion 21b of the cover central portion 21 is curved in a concave shape so as not to interfere with the fuel filling portion 113H of Fig. 4. A bar-shaped attachment piece 21x that extends downward is provided at the lower surface of the cover central portion 21.

Each recess 22 has a front surface 22f, a side surface 22p, a rear end surface 22q, an upper surface 22r and a projection edge 25. The upper surface 22r of each recess 22 is formed to dent downward from the upper surface of the cover central portion 21. The side surface 22p of each recess 22 is formed to be inclined downward sideward from the cover central portion 21 to the inner side end of each upper surface 22r. The rear end surface 22q of each recess 22 is formed to be inclined downward forward to the rear end of the upper surface 22r. The projection edge 25 of each recess 22 is formed to extend in the front and rear direction L along the outer side end of the upper surface 22r and project upward. The upper end of each projection edge 25 is lower than the upper surface of the cover central portion 21.

The front surface 22f of each recess 22 is formed to be inclined downward forward from the front end of the upper surface 22r. In the present embodiment, the entire upper surface 22r of each recess 22 is also inclined downward forward. The front surface 22f of each recess 22 is inclined downward by a larger angle than the upper surface 22r with respect to a horizontal plane. The front end of the front surface 22f of each recess 22 is formed to be lower than the upper end of the front end of the projection edge 25.

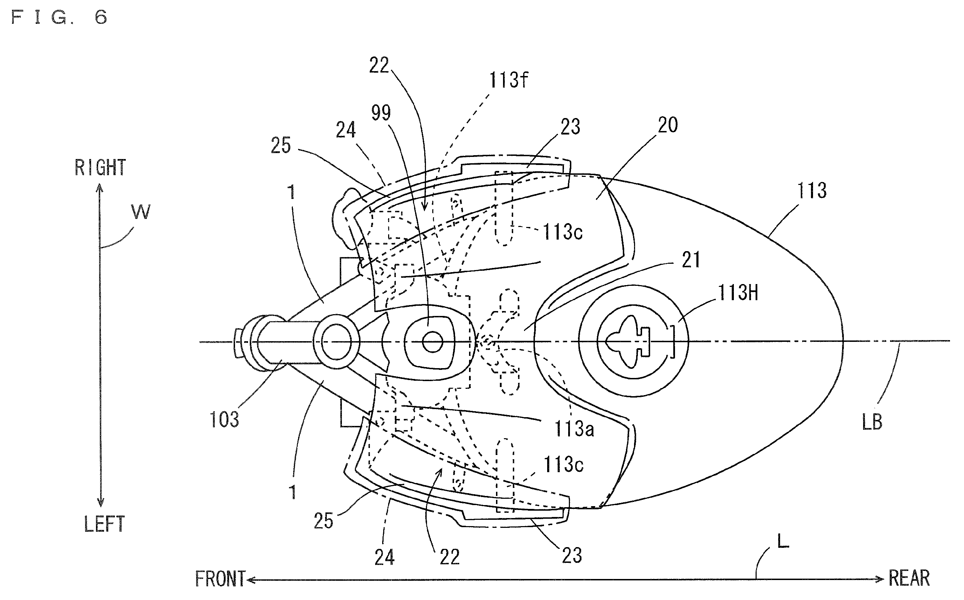

As described above, the tank cover 20 is attached on the fuel tank 113. Figs. 6, 7, 8 and 9 are a plan view, a side view of one side, a front view and an external perspective view of the fuel cover 20 being attached on the fuel tank 113, respectively.

At the time of attaching the tank cover 20 to the fuel tank 113, the attachment piece 21x of the tank cover 20 of Fig. 5(a) is inserted into the support hole 113b of Fig. 4. Further, screws N are attached to the screw holes 113d of the support pieces 113c of Fig. 4 through the through holes 23a of the pair of side cover supporters 23 of Figs. 5(a) to 5(c). In this manner, the tank cover 20 is fixed to the fuel tank 113.

As shown in Fig. 6, the cover central portion 21 overlaps with the vehicle central axis LB when seen in plan view while the tank cover 20 is attached to the fuel tank 113. Further, the tank cover 20 overlaps with the region between the front end portion 113f and the fuel filling portion 113H of the fuel tank 113 except for the region below the key operation unit 99 when seen in plan view. Further, part of the tank cover 20 is positioned outside the outer surfaces of the pair of main frames 1 when seen in plan view. Hereinafter, the pair of portions of the tank cover 20 positioned outside the outer surfaces of the pair of main frames 1 when seen in plan view is referred to as a pair of outer side portions 24. In Fig. 6, and Figs. 13 and 15 described below, regions that show the outer side portions 24 of the tank cover 20 are indicated by the one-dot and dash line. The pair of outer side portions 24 constitutes the outer side ends of the pair of recesses 22, respectively. The upper surfaces of the pair of outer side portions 24 are positioned below the upper surface of the cover central portion 21.

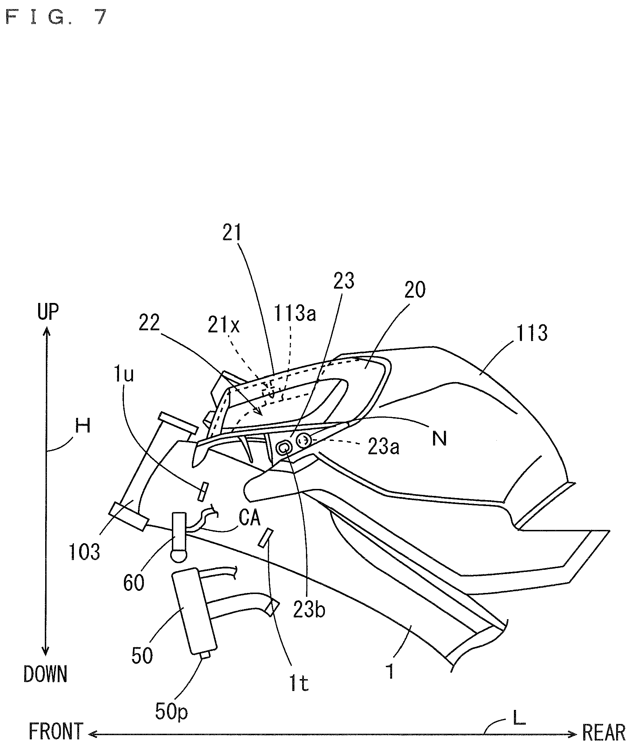

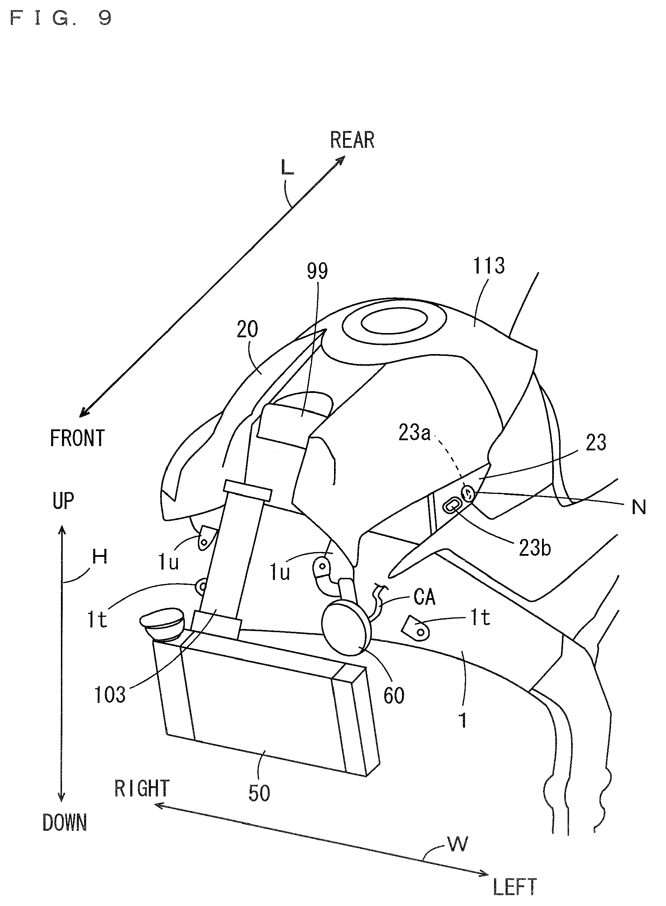

Further, as shown in Figs. 7 and 9, the long holes 23b of the pair of side cover supporters 23 are opened sideward while the tank cover 20 is attached to the fuel tank 113.

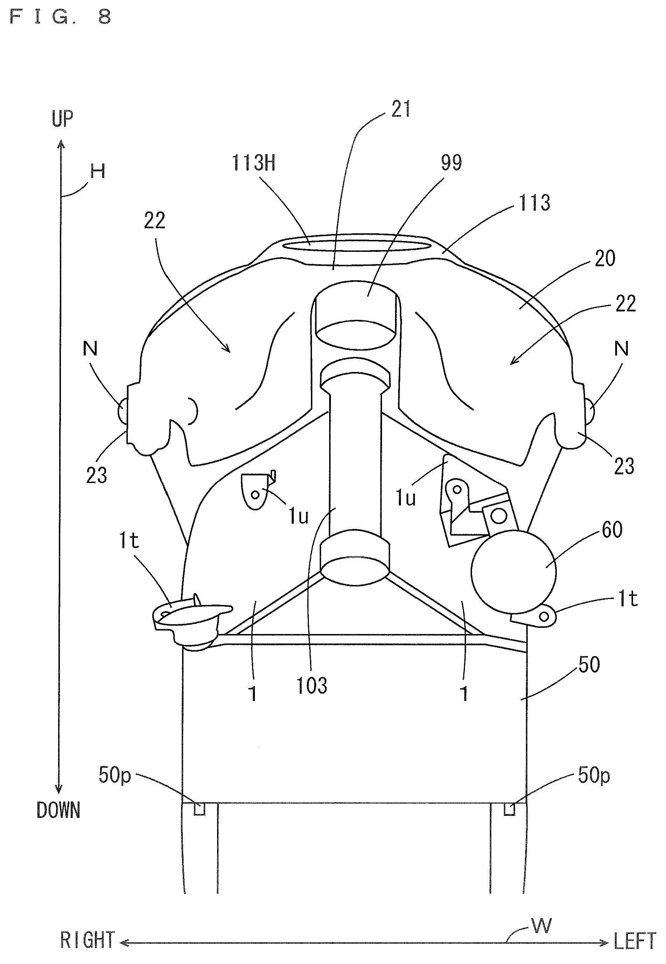

As shown in Figs. 7 and 9, a horn 60 and a cable CA are arranged on the left side of the pair of main frames 1. Further, as shown in Figs. 7, 8 and 9, a radiator 50 is arranged below the head pipe 103. As shown in Fig. 8, a pair of projections 50p is formed in the vicinity of the both ends of the lower surface of the radiator 50.

### (4) Side Covers and Front Covers

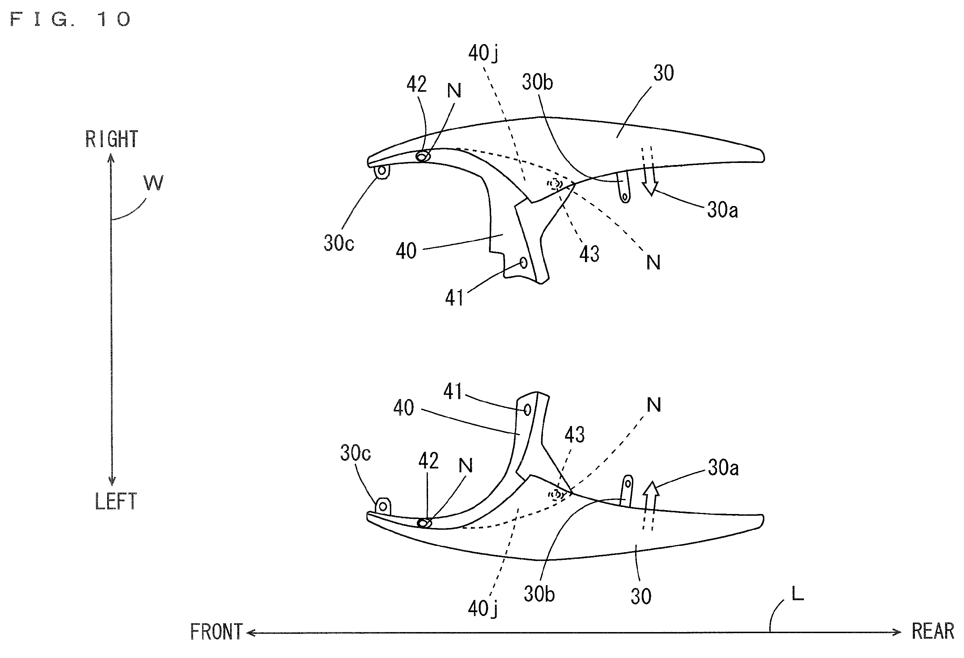

As described above, the pair of right and left front covers 40 is attached to the pair of right and left side covers 30, respectively. Figs. 10, 11 and 12 are a plan view, a front view and an external perspective view showing the pair of front covers 40 being respectively attached to the pair of side covers 30.

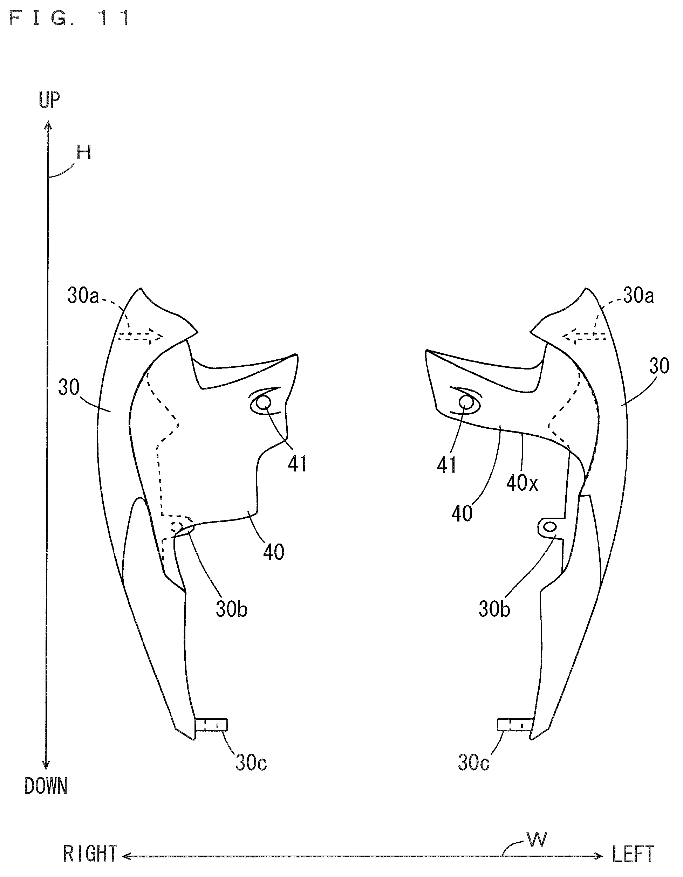

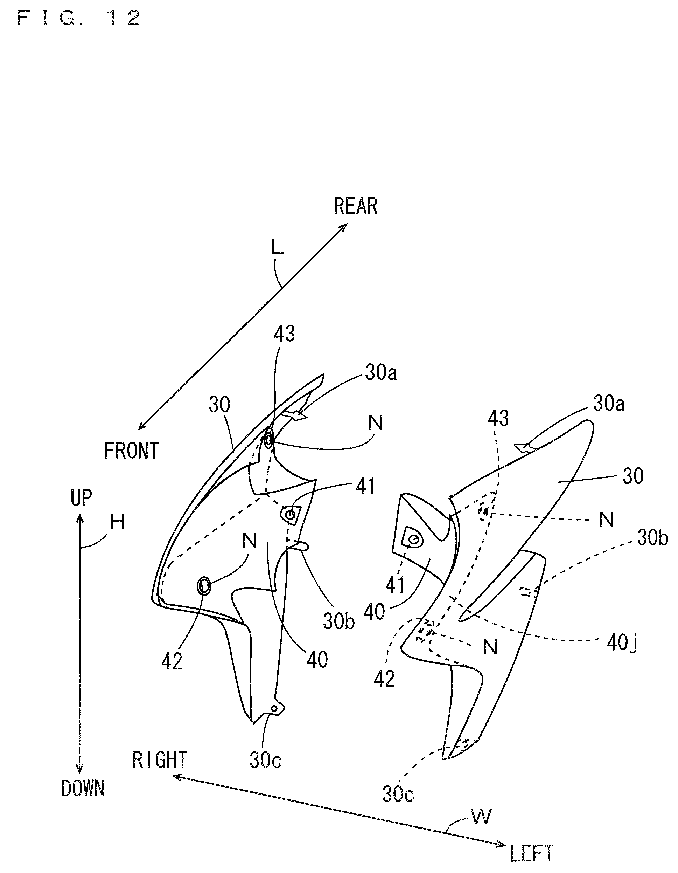

As shown in Figs. 11 and 12, upper portions of the pair of right and left side covers 30 are curved outward in a convex-shape in the width direction W, respectively. Lower portions of the pair of right and left side covers 30 are formed to extend downward. As shown in Fig. 12, the length of the upper end portion of each side cover 30 that extends in the front and rear direction L is larger than the length of the lower end portion of each side cover 30.

As shown in Figs. 10 to 12, a bar-shaped attachment piece 30a is formed to extend inward from the inner surface in the vicinity of the upper end portion of each side cover 30. Further, a support piece 30b is formed to extend inward from the inner surface in the vicinity of the rear end of each side cover 30. Further, a support piece 30c is formed to extend inward from the lower end of each side cover 30. Through holes are formed at the support pieces 30b, 30c. A grommet made of rubber is attached to the through hole of each support piece 30c.

As shown in Figs. 10 and 11, the pair of front covers 40 is formed to extend inward from the vicinity of the front ends of the pair of side covers 30. Further, as shown in Figs. 10 and 12, the pair of front covers 40 has attachment surfaces 40j opposite to the inner surfaces of the pair of side covers 30, respectively. As shown in Fig. 11, a notch 40x is formed at the left front cover 40 such that the horn 60, described above, can be exposed forward.

As shown in Figs. 10 and 12, two through holes 42, 43 for fixing the front cover 40 to the side cover 30 are formed at each front cover 40. Further, two screw holes (not shown) that correspond to the two through holes 42, 43 of the front cover 40 are formed at the inner surface of each side cover 30.

At the time of attaching the front cover 40 to each side cover 30, the front cover 40 is positioned to the side cover 30 such that the two through holes 42, 43 of the front cover 40 overlap with the two screw holes (not shown) formed at the inner surface of the side cover 30. In this state, two screws N are attached to the two screw holes of the side cover 30 through the two through holes 42, 43 of the front cover 40, respectively. In this manner, the pair of front covers 40 is fixed to the pair of side covers 30, respectively.

A through hole 41 for fixing the front cover 40 to the main frame 1 is formed at each of the front covers 40 in addition to the two through holes 42, 43, described above, for fixing the front cover 40 to the side cover 30. This through hole 41 is opened forward while each front cover 40 is fixed to the corresponding side cover 30.

### (5) Storage Space

As described above, the left side cover 30 and the left front cover 40 are attached to the left main frame 1 and on the left side of the tank cover 20. Further, the right side cover 30 and the right front cover 40 are attached to the right main frame 1 and on the right side of the tank cover 20.

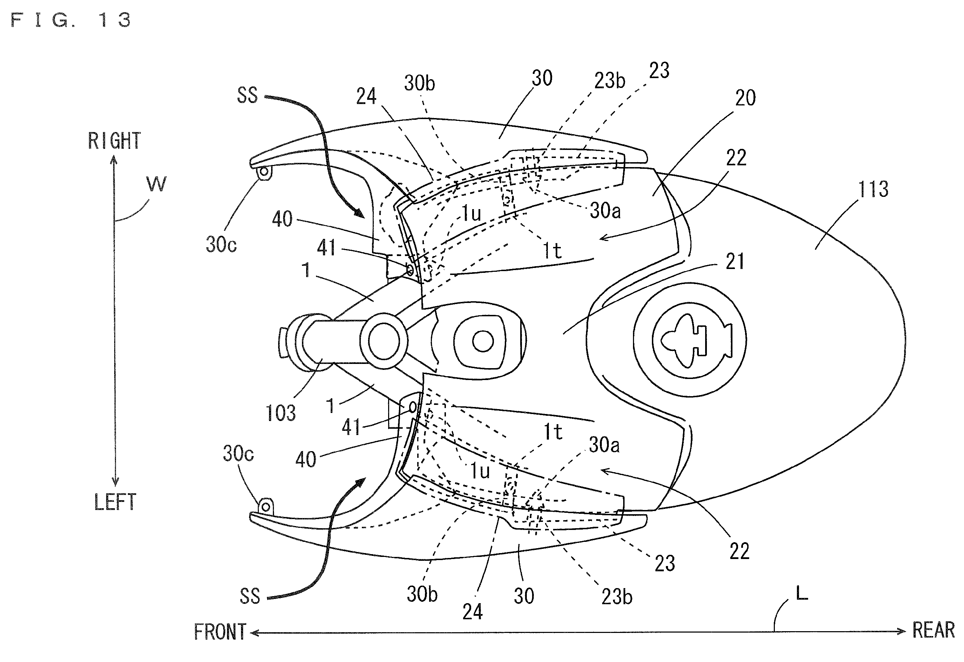

Figs. 13, 14, 15 and 16 are a plan view, a side view of one side, a front view and an external perspective view showing the pair of side covers 30 and the pair of front covers 40 being attached to the pair of main frames 1 and the tank cover 20, respectively.

As shown in Fig. 13, at the time of attaching the pair of side covers 30 and the pair of front covers 40 to the pair of main frames 1 and the tank cover 20, the attachment pieces 30a of the pair of side covers 30 are first inserted into the long holes 23b of the pair of side cover supporters 23 of the tank cover 20, respectively. Each long hole 23b extends in the front and rear direction L, so that each side cover 30 is temporally fixed to the tank cover 20 while being movable in the front and rear direction L with respect to the tank cover 20 (see Figs. 9 and 11).

Next, the through holes of the support pieces 30b of the pair of side covers 30 and the through holes of the pair of rear fixing pieces 1t attached to the pair of main frames 1 are overlapped, respectively. In this state, a bolt is inserted into the through hole of the left support piece 30b and the through hole of the left rear fixing piece 1t. Similarly, a bolt is inserted into the through hole of the right support piece 30b and the through hole of the right rear fixing piece 1t. A nut is attached to each bolt such that the support pieces 30b of the pair of side covers 30 and the pair of rear fixing pieces 1t are fixed, respectively (see Figs. 13 to 16). In Figs. 13 to 16, the blots and nuts are not shown.

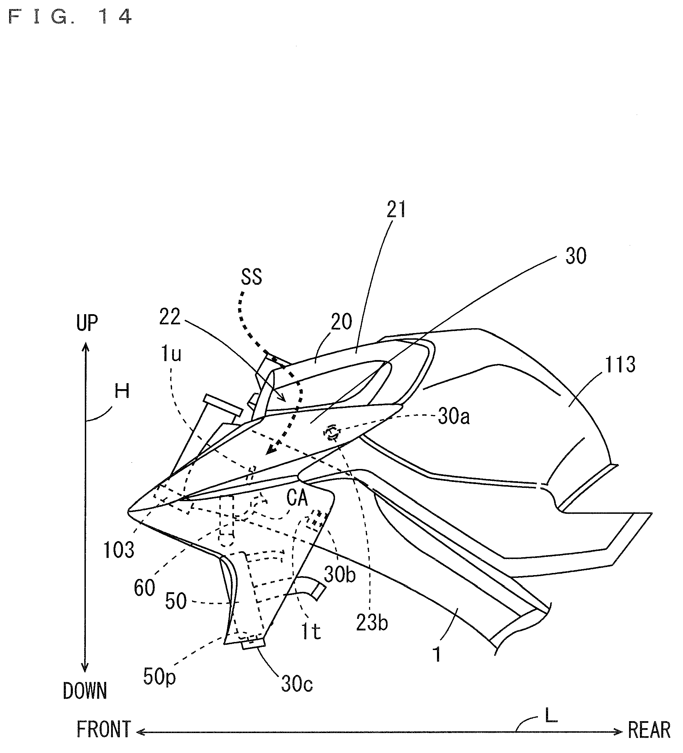

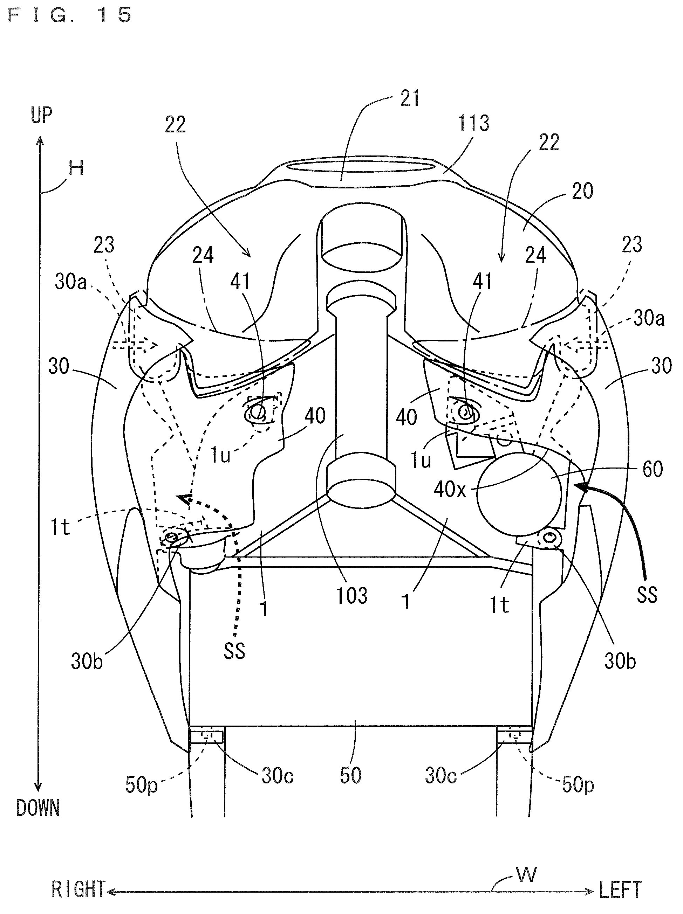

Further, the pair of projections 50p of the radiator 50 are inserted into the through holes of the support pieces 30c of the pair of side covers 30, respectively (see Figs. 14 and 15).

Furthermore, the through holes 41 of the pair of front covers 40 and the through holes of the pair of front fixing pieces 1u attached to the pair of main frames 1 are overlapped, respectively. In this state, a bolt is inserted into the through hole 41 of the left front cover 40 and the through hole of the left front fixing piece 1 u. Similarly, a bolt is inserted into the through hole 41 of the right front cover 40 and the through hole of the right front fixing piece 1 u. A nut is attached to each bolt such that the pair of front covers 40 and the pair of front fixing pieces 1u are fixed, respectively (see Figs. 13, 15 and 16).

In this manner, the pair of side covers 30 and the pair of front covers 40 are attached to the pair of main frames 1 and the tank cover 20. In this state, as denoted by the bold line arrows or the bold dotted line arrows in Figs. 13 to 16, a pair of storage spaces SS is formed between the pair of main frames 1 and the pair of side covers 30.

### (6) Effect

(6-1) As described above, the pair of side covers 30 are attached to the tank cover 20 to cover the pair of outer side portions 24 of the tank cover 20 from outside in the width direction W. Thus, the storage spaces SS are formed between the pair of main frames 1 and the pair of side covers 30.
   In this case, the horn 60 and cable CA, described above, an electric component such as a starter device or another object can be stored in the storage spaces SS. Thus, the storage spaces SS are ensured between the pair of main frames 1 and the pair of side covers 30, so that it is not necessary to ensure a large space for storing the electric component or the like between the pair of main frames 1. Therefore, the space between the pair of main frames 1 is set narrow such that the weight of the pair of main frames 1 can be reduced.
   Further, the pair of side covers 30 are attached to the tank cover 20 and the pair of main frames 1 outside the tank cover 20, whereby the pair of side covers 30 can be easily attached and removed. Therefore, the tank cover 20, the side covers 30 and the electric component in the storage spaces SS can be easily maintained.
   As a result, maintainability can be improved while the storage spaces SS are ensured in the motorcycle 100 and reduction in weight of the motorcycle 100 is realized.
(6-2) In the present embodiment, as shown in Figs. 13 and 15, the outer side portions 24 of the tank cover 20 is positioned above the pair of main frames 1. Further, the pair of side covers 30 has portions positioned below the outer side portions 24 of the tank cover 20. Further, the portions positioned below are positioned outside the pair of outer side portions 24 when seen in plan view. Thus, the larger storage spaces SS are ensured between the pair of main frames 1 and the pair of side covers 30. Thus, flexibility in layout of the component in the storage spaces SS is further improved.
(6-3) As described above, in the tank cover 20, the upper surfaces 22r of the pair of recesses 22 are formed to dent downward from the upper surface of the cover central portion 21. The pair of projection edges 25 is formed to project upward along the outer side ends of the pair of recesses 22. In this case, water that flows down from the upper surface of the cover central portion 21 to the upper surfaces 22r of the pair of recesses 22 is prevented from flowing out from the outside of the pair of projection edges 25.
   Further, in the tank cover 20, the upper surfaces 22r and the front surfaces 22f of the pair of recesses 22 are inclined downward forward. Further, the front ends of the front surfaces 22f of the pair of recesses 22 are formed to be lower than the upper ends of the front ends of the pair of projection edges 25. In this case, water on the upper surfaces 22r of the recesses 22 is led toward the front ends of the recesses 22. Further, because the front ends of the recesses 22 are lower than the upper ends of the front ends of the projection edges 25, water is prevented from flowing out at the front ends of the recesses 22 to outside past the projection edges 25.
(6-4) Further, in the present embodiment, the pair of front covers 40 is attached to the pair of main frames 1 and the pair of side covers 30. The pair of front covers 40 covers part of the pair of storage spaces SS from the front. In this case, water can be prevented from entering the pair of storage spaces SS from the front by the pair of front covers 40. Thus, water is prevented from adhering to the component stored in the pair of storage spaces SS. Further, the component stored in the storage spaces SS can be easily maintained from the front of the motorcycle 100 by removing the pair of front covers 40 from the pair of main frames 1 and the pair of side covers 30.
(6-5) In the present embodiment, a single-cylinder engine may be used as the engine 109. In the motorcycle 100 that includes the single-cylinder engine, the space between the pair of main frames 1 is narrow as compared to the motorcycle 100 that includes a multi-cylinder engine. Even in this case, a desired component can be arranged in the pair of storage spaces SS. Thus, flexibility in layout of a constituent component of the motorcycle 100 such as an electric component is improved. Further, it is not necessary to widen the space between the pair of main frames 1 in order to arrange the desired constituent component between the pair of main frames 1. Thus, reduction in weight of the pair of main frames 1 is not interfered. Further, the pair of side covers 30 can be easily attached and removed, so that the component stored in the pair of storage spaces SS can be easily maintained.
(6-6) In the present embodiment, the pair of side covers 30 is arranged to be spaced apart from the head light 90 and the head light cover 91, so that the size and the weight of the pair of side covers 30 can be reduced, respectively. Further, at the time of attaching and removing the pair of side covers 30, the head light 90, the head light cover 91 and tools are not likely to interfere with each other. Thus, the pair of side covers 30 can be more easily maintained.
(6-7) As shown in Figs. 11 and 15, the notch 40x for exposing the horn 60 forward is formed at the left front cover 40. In this case, the sound output forward from the horn 60 is prevented from being absorbed by the front cover 40. In this case, the horn 60 preferably includes a water-resistant mechanism.

### (7) Positional Relationship between Tank Cover and Handle

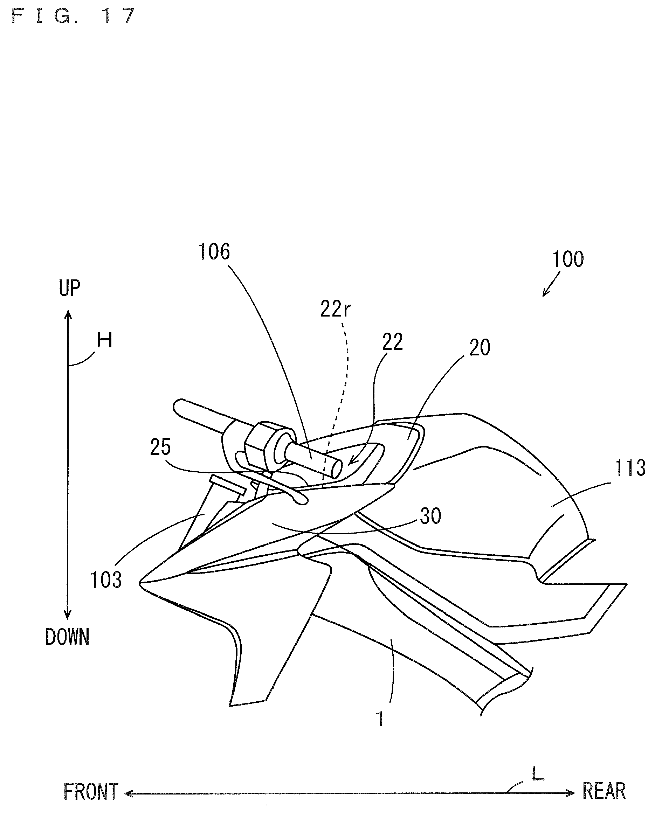

Fig. 17 is a partially enlarged side view of the motorcycle 100 when the handle 106 is operated leftward. As shown in Fig. 17, the handle 106 is operated leftward (or rightward), for example, such that the handle 106 is rotated with the head pipe 103 as a center. Even in this case, as shown in Fig. 17, the upper surface 22r of the recess 22 of the tank cover 20 is positioned below a rotating trajectory of the handle 106. Further, the upper end of the projection edge 25 is positioned below the rotating trajectory of the handle 106.

Thus, the outer side portion 24 (Fig. 6) of the tank cover 20 can be extended to a position further outward. Therefore, the handle 106 can be prevented from interfering with the tank cover 20 during rotation of the handle 106 while the sufficiently-large storage spaces SS are ensured below the outer side portions 24 of the tank cover 20.

### (8) Other Embodiments

While the pair of front covers 40 are respectively provided at the front end portions of the pair of side covers 30 in the embodiment described above, the front covers 40 do not have to be provided. In this case, a number of components is reduced and assembly steps of the motorcycle 100 can be reduced.

While the tank cover 20, the pair of side covers 30 and the pair of front covers 40 are individually formed in the embodiment described above, the invention is not limited to this. When the tank cover 20, the pair of side covers 30 and the pair of front covers 40 are fabricated of the same resin material, at least two of the tank cover 20, the pair of side covers 30 and the pair of front covers 40 may be integrally formed.

The tank cover 20 and the pair of front covers 40 may be fabricated by integral formation, for example, or the tank cover 20 and the pair of side covers 30 may be fabricated by the integral formation. Alternately, the pair of side covers 30 and the pair of front covers 40 may be fabricated by the integral formation.

While the pair of front covers 40 is attached to the pair of main frames 1 and the pair of side covers 30 in the embodiment described above, the invention is not limited to this. The pair of front covers 40 may be attached to the tank cover 20 only, may be attached to the pair of side covers 30 only or, may be attached to the pair of main frames 1 only. Further, the pair of front covers 40 may be attached to the tank cover 20, the pair of side covers 30 and the pair of main frames 1.

While the pair of side covers 30 respectively overlaps with part of the pair of main frames 1 when seen in side view in the embodiment described above, the invention is not limited to this. The pair of side covers 30 may be configured to overlap with the pair of entire main frames 1 when seen in side view.

While the tank cover 20 overlaps with a region between the front end portion 113f and the fuel filling portion 113H of the fuel tank 113 except for the key operation 99 and the vicinity thereof when seen in plan view in the embodiment described above, the invention is not limited to this. The tank cover 20 may be configured to overlap with the entire upper surface of the fuel tank 113 except for the fuel filling portion 113H when seen in plan view.

While an example in which the electric component is arranged in the storage spaces SS is described in the embodiment described above, the invention is not limited to this. When the side cover 30 is provided with a window that can open and close the storage space SS, for example, rider's goggles, gloves, tools or the like may also be stored in the storage space SS.

While the embodiment described above is an example in which the present invention is applied to the motorcycle, the invention is not limited to this. The present invention may be applied to another saddle-straddling type motor vehicle such as a motor tricycle, an ATV (All Terrain Vehicle) or the like.

### (9) Correspondences between Constituent Elements in Claims and Parts in Preferred Embodiments

In the following paragraphs, non-limiting examples of correspondences between various elements recited in the claims below and those described above with respect to various preferred embodiments of the present invention are explained.

In the embodiment described above, the motorcycle 100 is an example of a saddle-straddling type motor vehicle, the head pipe 103 is an example of a head pipe, the pair of main frames 1 is an example of a pair of main frames, the vehicle body frame 1X is an example of a vehicle body frame, the fuel tank 113 is an example of a fuel tank, the tank cover 20 is an example of a tank cover and the pair of side covers 30 is an example of a pair of side covers.

Further, the pair of outer side portions 24 is an example of a pair of outer side portions, the side cover supporter 23 is an example of a supporter, the engine 109 is an example of a single-cylinder engine, the handle 106 is an example of a handle, the cover central portion 21 is an example of a central portion of the tank cover, the recess 22 is an example of a recess of the tank cover and the upper surface 22r of the recess 22 is an example of an upper surface of the recess.

Furthermore, the pair of projection edges 25 is an example of a pair of right and left projection edges of the tank cover, the pair of front covers 40 is an example of a front wall, the head light 90 and the head light cover 91 are examples of a head light main body.

As each of various elements recited in the claims, various other constituent elements having configurations or functions described in the claims can be also used.

### INDUSTRIAL APPLICABILITY

The present invention can be effectively utilized for a vehicle.

While preferred embodiments of the present invention have been described above, it is to be understood that variations and modifications will be apparent to those skilled in the art without departing the scope of the present invention. The scope of the present invention, therefore, is to be determined solely by the following claims.

## Claims

1. A saddle-straddling type motor vehicle comprising:
a vehicle body frame (1X) that includes a head pipe (103) and a pair of right and left main frames (1) extending to the rearward of the vehicle from the head pipe (103);
a fuel tank (113) fixed to the vehicle body frame (1X);
a tank cover (20) provided to at least partially overlap with the fuel tank (113) when seen in plan view; and
a pair of right and left side covers (30) provided to overlap with the pair of main frames (1) when seen in side view, wherein
the tank cover (20) includes
a pair of right and left outer side portions (24) positioned outside of outer surfaces of the pair of main frames (1) when seen in plan view, and
supporters (23), respectively provided at the pair of outer side portions (24), that respectively support the pair of side covers (30), and
the pair of side covers (30) is arranged to cover at least part of the pair of outer side portions (24) from outside in a vehicle width direction (W), and to ensure a large space (SS) between the pair of side covers (30) and the pair of main frames (1),
a vehicle component member (60, CA) is arranged in the space (SS) between the pair of side covers (30) and the pair of main frames (1),
the saddle-straddling type motor vehicle further comprises a head light main body (90, 91) provided in front of the head pipe (103), **characterized in that**
the vehicle component member (60, CA) is an electric component; and
the pair of side covers (30) are arranged to be spaced apart from the head light main body (90,91).

2. The saddle-straddling type motor vehicle according to claim 1, further comprising:
a single-cylinder engine (109) supported between the pair of main frames (1) when seen in plan view.

3. The saddle-straddling type motor vehicle according to claim 1 or 2, wherein
at least part of the pair of outer side portions (24) is positioned above upper surfaces of the pair of main frames (1), and
the pair of side covers (30) includes portions positioned below the pair of outer side portions (24), and the portions positioned below are provided to be positioned outside the pair of outer side portions (24) when seen in plan view.

4. The saddle-straddling type motor vehicle according to any one of claims 1 to 3, further comprising:
a handle (106) supported at the head pipe (103) to be rotatable, wherein
the tank cover (20) includes
a central portion (21) that overlaps with a central axis (LB) extending in a vehicle front and rear direction (L) when seen in plan view, and
a pair of right and left recesses (22) provided on right and left outer sides of the central portion (21) when seen in plan view,
the pair of outer side portions (24) are provided to respectively constitute outer side ends of the pair of recesses (22), and upper surfaces of the pair of outer side portions (24) are positioned below an upper surface of the central portion (21), and
upper surfaces (22r) of the pair of recesses (22) are formed to dent downward from the upper surface of the central portion (21), and are arranged to be positioned below a rotating trajectory of the handle (106).

5. The saddle-straddling type motor vehicle according to claim 4, wherein
the tank cover (20) has a pair of right and left projection edges (25) provided to project upward along the outer side ends of the pair of recesses (22), and
upper ends of the projection edges (25) are arranged at a position lower than the upper surface of the central portion (21) and below the rotating trajectory of the handle (106).

6. The saddle-straddling type motor vehicle according to claim 5, wherein
at least part of the upper surfaces (22r) of the pair of recesses (22) is inclined downward forward, and
front ends of the pair of recesses (22) are formed to be lower than upper ends of front ends of the projection edges (25).

7. The saddle-straddling type motor vehicle according to any one of claims 1 to 6, further comprising:
front wall portions (40) provided to cover front side of a space between the pair of side covers (30) when seen in plan view.

8. The saddle-straddling type motor vehicle according to claim 7, wherein
the front wall portions (40) are attached to at least one of the pair of side covers (30), the tank cover (20) and the pair of main frames (1).

9. The saddle-straddling type motor vehicle according to any one of claims 1 to 8, wherein
a part of the tank cover (20) extends forward of a front end portion (113f) of the fuel tank (113) when seen in plan view.

10. The saddle-straddling type motor vehicle according to any one of claims 1 to 9, wherein
the tank cover (20) overlaps with a region between a front end portion (113f) and a fuel filling portion (113H) of the fuel tank (113).

11. The saddle-straddling type motor vehicle according to claim 10, wherein
the tank cover (20) overlaps with the region between the front end portion (113f) and the fuel filling portion (113H) of the fuel tank (113) except for a region below a key operation unit (99) when seen in plan view.

## Patentansprüche

1. Ein Motorfahrzeug vom Sattel-Grätsch-Typ, das folgende Merkmale aufweist:
einen Fahrzeugkörperrahmen (1X), der ein Kopfrohr (103) und ein Paar von rechten und linken Hauptrahmen (1) umfasst, die sich von dem Kopfrohr (103) zu der Rückseite des Fahrzeugs erstrecken;
einen Kraftstofftank (113), der an dem Fahrzeugkörperrahmen (1X) befestigt ist;
eine Tankabdeckung (20), die vorgesehen ist, um in der Draufsicht zumindest teilweise mit dem Kraftstofftank (113) zu überlappen; und
ein Paar von rechten und linken Seitenabdeckungen (30), das vorgesehen ist, um in der Seitenansicht mit dem Paar von Hauptrahmen (1) zu überlappen, wobei
die Tankabdeckung (20) folgende Merkmale umfasst:
ein Paar von rechten und linken Außenseitenabschnitten (24), die in der Draufsicht außerhalb von Außenoberflächen des Paars von Hauptrahmen (1) positioniert sind, und
Träger (23), die jeweils an dem Paar von Außenseitenabschnitten (24) vorgesehen sind, die jeweils das Paar von Seitenabdeckungen (30) tragen, und
das Paar von Seitenabdeckungen (30) angeordnet ist, um zumindest einen Teil des Paars von Außenseitenabschnitten (24) von außerhalb in einer Fahrzeugbreiterichtung (W) abzudecken, und um einen großen Zwischenraum (SS) zwischen dem Paar von Seitenabdeckungen (30) und dem Paar von Hauptrahmen (1) sicherzustellen,
ein Fahrzeugkomponentenbauglied (60, CA) in dem Zwischenraum (SS) zwischen dem Paar von Seitenabdeckungen (30) und dem Paar von Hauptrahmen (1) angeordnet ist,
das Motorfahrzeug vom Sattel-Grätsch-Typ ferner einen Scheinwerferhauptkörper (90, 91) aufweist, der vor dem Kopfrohr (103) vorgesehen ist, **dadurch gekennzeichnet, dass**
das Fahrzeugkomponentenbauglied (60, CA) eine elektrische Komponente ist; und
das Paar von Seitenabdeckungen (30) angeordnet ist, um von dem Scheinwerferhauptkörper (90, 91) beabstandet zu sein.

2. Das Motorfahrzeug vom Sattel-Grätsch-Typ gemäß Anspruch 1, das ferner folgendes Merkmal aufweist:
einen Einzylindermotor (109), der in der Draufsicht zwischen dem Paar von Hauptrahmen (1) getragen wird.

3. Das Motorfahrzeug vom Sattel-Grätsch-Typ gemäß Anspruch 1 oder 2, bei dem
zumindest ein Teil des Paars von Außenseitenabschnitten (24) über oberen Oberflächen des Paars von Hauptrahmen (1) positioniert ist, und
das Paar von Seitenabdeckungen (30) Abschnitte umfasst, die unterhalb des Paars von Außenseitenabschnitten (24) positioniert sind, und die unterhalb positionierten Abschnitte vorgesehen sind, um in der Draufsicht außerhalb des Paars von Außenseitenabschnitten (24) positioniert zu sein.

4. Das Motorfahrzeug vom Sattel-Grätsch-Typ gemäß einem der Ansprüche 1 bis 3, das ferner folgende Merkmale aufweist:
einen Griff (106), der an dem Kopfrohr (103) getragen wird, um drehbar zu sein, wobei
die Tankabdeckung (20) folgende Merkmale umfasst:
einen Mittelabschnitt (21), der mit einer Mittelachse (LB) überlappt, die sich in der Draufsicht in einer Fahrzeugvorder- und -rückrichtung (L) erstreckt, und
ein Paar von rechten und linken Ausnehmungen (22), die in der Draufsicht auf einer rechten und linken Außenseite des Mittelabschnitts (21) vorgesehen sind,
das Paar von Außenseitenabschnitten (24) vorgesehen ist, um jeweils Außenseitenenden des Paars von Ausnehmungen (22) zu bilden, und obere Oberflächen des Paars von Außenseitenabschnitten (24) unterhalb einer oberen Oberfläche des Mittelabschnitts (21) positioniert sind, und
obere Oberflächen (22r) des Paars von Ausnehmungen (22) gebildet sind, um sich von der oberen Oberfläche des Mittelabschnitts (21) nach unten einzubeulen, und angeordnet sind, um unterhalb einer Drehbahn des Griffs (106) positioniert zu sein.

5. Das Motorfahrzeug vom Sattel-Grätsch-Typ gemäß Anspruch 4, bei dem
die Tankabdeckung (20) ein Paar von rechten und linken Vorsprungskanten (25) aufweist, die vorgesehen sind, um entlang den Außenseitenenden des Paars von Ausnehmungen (22) nach oben vorzustehen, und
obere Enden der Vorsprungskanten (25) an einer Position angeordnet sind, die niedriger ist als die obere Oberfläche des Mittelabschnitts (21) und unterhalb der Drehbahn des Griffs (106) liegt.

6. Das Motorfahrzeug vom Sattel-Grätsch-Typ gemäß Anspruch 5, bei dem
zumindest ein Teil der oberen Oberflächen (22r) des Paars von Ausnehmungen (22) nach unten vorne geneigt ist, und
vordere Enden des Paars von Ausnehmungen (22) gebildet sind, um niedriger zu sein als obere Enden von vorderen Enden der Vorsprungskanten (25).

7. Das Motorfahrzeug vom Sattel-Grätsch-Typ gemäß einem der Ansprüche 1 bis 6, das ferner folgende Merkmale aufweist:
Vorderwandabschnitte (40), die vorgesehen sind, um in der Draufsicht eine Vorderseite eines Zwischenraums zwischen dem Paar von Seitenabdeckungen (30) abzudecken.

8. Das Motorfahrzeug vom Sattel-Grätsch-Typ gemäß Anspruch 7, bei dem
die Vorderwandabschnitte (40) an zumindest einem des Paars von Seitenabdeckungen (30), der Tankabdeckung (20) oder des Paar von Hauptrahmen (1) angebracht sind.

9. Das Motorfahrzeug vom Sattel-Grätsch-Typ gemäß einem der Ansprüche 1 bis 8, bei dem:
ein Teil der Tankabdeckung (20) sich in der Draufsicht von einem Vorderendabschnitt (113f) des Kraftstofftanks (113) nach vorne erstreckt.

10. Das Motorfahrzeug vom Sattel-Grätsch-Typ gemäß einem der Ansprüche 1 bis 9, bei dem:
die Tankabdeckung (20) mit einer Region zwischen einem Vorderendabschnitt (113f) und einem Kraftstofffüllabschnitt (113H) des Kraftstofftanks (113) überlappt.

11. Das Motorfahrzeug vom Sattel-Grätsch-Typ gemäß Anspruch 10, bei dem:
die Tankabdeckung (20) in der Draufsicht mit der Region zwischen dem Vorderendabschnitt (113f) und dem Kraftstofffüllabschnitt (113H) des Kraftstofftanks (113) überlappt, außer einer Region unterhalb einer Schlüsselbetriebseinheit (99).

## Revendications

1. Véhicule à moteur du type à selle, comprenant:
un châssis de carrosserie de véhicule (1X) qui comporte un tube de tête (103) et une paire de châssis principaux droit et gauche (1) s'étendant vers l'arrière du véhicule à partir du tuyau de tête (103);
un réservoir à carburant (113) fixé sur le châssis de carrosserie de véhicule (1X);
un couvercle de réservoir (20) prévu pour venir au moins partiellement en recouvrement avec le réservoir à carburant (113), lorsque vu en vue en plan; et
une paire de couvercles latéraux droit et gauche (30) prévus de manière à venir en recouvrement avec la paire de châssis principaux (1), lorsque vus en vue latérale, dans lequel
le couvercle de réservoir (20) comporte
une paire de parties latérales extérieures droite et gauche (24) positionnées à l'extérieur des surfaces extérieures de la paire de châssis principaux (1), lorsque vues en vue en plan, et
des supports (23), prévus respectivement sur la paire de parties latérales extérieures (24), qui supportent respectivement la paire de couvercles latéraux (30), et
la paire de couvercles latéraux (30) sont disposés de manière à recouvrir au moins une partie de la paire de parties latérales extérieures (24) depuis l'extérieur dans un sens de la largeur du véhicule (W), et à assurer un grand espace (SS) entre la paire de couvercles latéraux (30) et la paire de châssis principaux (1),
un élément de composant de véhicule (60, CA) est disposé dans l'espace (SS) entre la paire de couvercles latéraux (30) et la paire de châssis principaux (1),
le véhicule à moteur de type à selle comprend par ailleurs un corps principal de phare (90, 91) prévu en regard du tuyau de tête (103),
**caractérisé par le fait que**
l'élément de composant de véhicule (60, CA) est un composant électrique; et
la paire de couvercles latéraux (30) sont disposés de manière à être espacés du corps principal de phare (90, 91).

2. Véhicule à moteur de type à selle selon la revendication 1, comprenant par ailleurs:
un moteur monocylindre (109) supporté entre la paire de châssis principaux (1), lorsque vu en vue en plan.

3. Véhicule à moteur de type à selle selon la revendication 1 ou 2, dans lequel
au moins une partie de la paire de parties latérales extérieures (24) est positionnée au-dessus des surfaces supérieures de la paire de châssis principaux (1), et
la paire de couvercles latéraux (30) comporte des parties positionnées au-dessous de la paire de parties latérales extérieures (24), et les parties positionnées au-dessous sont prévues de manière à être positionnées à l'extérieur de la paire de parties latérales extérieures (24), lorsque vues en vue en plan.

4. Véhicule à moteur de type à selle selon l'une quelconque des revendications 1 à 3, comprenant par ailleurs:
une poignée (106) supportée sur le tuyau de tête (103) de manière à pouvoir tourner, dans lequel
le couvercle de réservoir (20) comporte
une partie centrale (21) qui vient en recouvrement avec un axe central (LB) s'étendant dans une direction d'avant en arrière du véhicule (L), lorsque vu en vue en plan, et
une paire d'évidements droit et gauche (22) prévus sur les côtés extérieurs droit et gauche de la partie centrale (21), lorsque vus en vue en plan,
la paire de parties latérales extérieures (24) sont prévues de manière à constituer respectivement les extrémités latérales extérieures de la paire d'évidements (22), et les surfaces supérieures de la paire de parties latérales extérieures (24) sont positionnées au-dessous d'une surface supérieure de la partie centrale (21), et
les surfaces supérieures (22r) de la paire d'évidements (22) sont formées de manière à se situer vers le bas par rapport à la surface supérieure de la partie centrale (21), et sont disposées de manière à être positionnées au-dessous d'une trajectoire de rotation de la poignée (106).

5. Véhicule à moteur de type à selle selon la revendication 4, dans lequel
le couvercle de réservoir (20) présente une paire de bords saillants droit et gauche (25) prévus de manière à ressortir vers le haut le long des extrémités latérales extérieures de la paire d'évidements (22), et
les extrémités supérieures des bords saillants (25) sont disposées en une position plus basse que la surface supérieure de la partie centrale (21) et au-dessous de la trajectoire de rotation de la poignée (106).

6. Véhicule à moteur de type à selle selon la revendication 5, dans lequel
au moins une partie des surfaces supérieures (22r) de la paire d'évidements (22) est inclinée vers le bas vers et l'avant, et
les extrémités avant de la paire d'évidements (22) sont formées de manière à être plus basses que les extrémités supérieures des extrémités avant des bords saillants (25).

7. Véhicule à moteur de type à selle selon l'une quelconque des revendications 1 à 6, comprenant par ailleurs:
des parties de paroi avant (40) prévues de manière à couvrir le côté avant d'un espace entre la paire de couvercles latéraux (30), lorsque vues en vue en plan.

8. Véhicule à moteur de type à selle selon la revendication 7, dans lequel
les parties de paroi avant (40) sont fixées à au moins l'un parmi la paire de couvercles latéraux (30), le couvercle de réservoir (20) et la paire de châssis principaux (1).

9. Véhicule à moteur de type à selle selon l'une quelconque des revendications 1 à 8, dans lequel
une partie du couvercle de réservoir (20) s'étend à l'avant d'une partie d'extrémité avant (113f) du réservoir à carburant (113), lorsque vue en vue en plan.

10. Véhicule à moteur de type à selle selon l'une quelconque des revendications 1 à 9, dans lequel
le couvercle de réservoir (20) vient en recouvrement avec une région entre une partie d'extrémité avant (113f) et une partie de remplissage de carburant (113H) du réservoir à carburant (113).

11. Véhicule à moteur de type à selle selon la revendication 10, dans lequel
le couvercle de réservoir (20) vient en recouvrement avec la zone entre la partie d'extrémité avant (113f) et la partie de remplissage de carburant (113H) du réservoir à carburant (113), à l'exception d'une région au-dessous d'une unité d'actionnement à clé (99), lorsque vu en vue en plan.
